Europäisches Patentamt

European Patent Office

Office européen des brevets

(19)

(11) Veröffentlichungsnummer : **0 468 954 A2**

# (12) EUROPÄISCHE PATENTANMELDUNG

(21) Anmeldenummer : **91890165.3**

(51) Int. Cl.$^5$ : **B01D 17/06**

(22) Anmeldetag : **25.07.91**

(30) Priorität : **27.07.90 AT 1583/90**

(43) Veröffentlichungstag der Anmeldung :
**29.01.92 Patentblatt 92/05**

(84) Benannte Vertragsstaaten :
**AT BE CH DE DK ES FR GB GR IT LI LU NL SE**

(71) Anmelder : **VOEST-ALPINE
INDUSTRIEANLAGENBAU GESELLSCHAFT
m.b.H.
Turmstrasse 44
A-4020 Linz (AT)**

(72) Erfinder : **Swatek, Harald, Dipl.-Ing.
Auwaldgasse 78
A-8041 Graz (AT)**
Erfinder : **Ortmayr, Edgar, Dipl.-Ing
Raad 5
A-4300 St. Valentin (AT)**

(74) Vertreter : **Kretschmer, Adolf, Dipl.-Ing. et al
Patentanwälte Dipl.Ing. A. Kretschmer Dr.
Thomas M. Haffner Schottengasse 3a
A-1014 Wien (AT)**

(54) **Verfahren zum Spalten von Emulsionen.**

(57)    Bei einem Verfahren zum Spalten von Emulsionen des Typs Öl-in-Wasser oder Wasser-in-Öl unter Anwendung eines elektrischen Feldes, welches zwischen elektrisch voneinander isolierten Elektroden aufgebaut wird, wird ein Gleichspannungsfeld zur Erzielung einer Polarisation der Emulsion angelegt und es wird das Gleichspannungsfeld von einem Wechselfeld überlagert.

EP 0 468 954 A2

Die Erfindung bezieht sich auf ein Verfahren zum Spalten von Emulsionen des Typs Öl-in-Wasser oder Wasser-in-Öl unter Anwendung eines elektrischen Feldes, welches zwischen elektrisch voneinander isolierten Elektroden aufgebaut wird.

Für die Flockung, Fällung, Agglomeration oder Koagulation von gelösten, kollodial gelösten, suspendierten oder emulgierten Inhaltsstoffen sind eine Reihe von Verfahren und Vorrichtungen bekanntgeworden. Aus der AT-PS 389 235 wurde beispielsweise die Verwendung von Ultraschallwellen in einem Beschallungstank vorgeschlagen. Aus der US-PS 4 582 629 ist die Verwendung von Mikrowellen für das Brechen von Emulsionen bekannt. Auch die Anwendung elektrischer Energie für das Brechen von Emulsionen wurde in verschiedenen Ausbildungen bereits vorgeschlagen. Die bei Flüssig-Flüssig-Systemen auftretende koaleszenzbeschleunigende Wirkung elektrischer Felder ist in verschiedenen Formen bereits angewandt worden. Bei der Anwendung derartiger elektrischer Felder werden isolierte Elektroden verwendet, um Nebeneffekte, insbesondere elektrolytische Effekte, hintanzuhalten, und es existiert bei der Verwendung elektrischer Felder in der Regel eine kritische Feldstärke, oberhalb derer eine sofortige Koaleszenz, d.h. Brechung der Emulsion eintritt. Die jeweils anwendbare Feldstärke ist aber durch die Natur der eingesetzten Emulsion begrenzt und es ist bereits bekannnt, daß Gleichspannungsfelder eine geringere Koaleszenzeffektivität besitzen und darüberhinaus unerwünschte Elektrolyseerscheinungen zur Folge haben können. Aus diesem Grunde wurden in der Regel Wechselspannungsfelder bevorzugt eingesetzt. Aus der DE-OS 37 09 456 ist die Verwendung von Hochspannungsfeldern mit Rechteckimpulsform bereits vorgeschlagen worden. Ein Maximum der Koaleszenzeffektivität wurde hiebei bei kleinen Frequenzen im Bereich von 60 Hz beobachtet, wobei bei elektrischen Wechselfeldern die im Öl eingeschlossenen Wassertröpfchen erheblich polarisiert und daher stark deformiert werden. An denjenigen Stellen, an denen sich Öl-Wasser-Tröpfchen nahekommen, können Entladungserscheinungen in Form von Blitzen oder starker Temperaturentwicklung beobachtet werden, und die Verwendung von elektrischen Wechselfeldern ist daher gleichfalls mit einer Reihe von unerwünschten Begleiteffekten verbunden, welche dazu führen, daß die Spaltrate nicht reproduzierbar wird und zusätzlich chemische bzw. chemisch-physikalische Reaktionen ablaufen, die zu Reagenzverlusten und/oder zu störenden Nebenprodukten führen. In den Fällen einer effizienten Phasentrennung unter Verwendung von elektrischen Wechselfeldern ist zumeist die Spaltrate im Vergleich zur eingesetzten Energie relativ gering. Durch das elektrische Wechselfeld wird die Polarisation und damit auch die Deformation der Teilchen ständig geändert und das Zusammenbrechen der Emulsion durch überlagerte Effekte behindert. Die relativ hohe eingesetzte Energie führt zu einer Erwärmung und bringt die Gefahr des Überschreitens der Durchbruchsspannung mit sich.

Die Erfindung zielt nun darauf ab, ein Verfahren der eingangs genannten Art zu schaffen, bei welchem mit relativ geringer eingesetzter Energie ein reproduzierbare Spaltung von Emulsionen nicht nur des Typs Öl-in-Wasser sonder auch des Typs Wasser-in-Öl sowie von Mischformen reproduzierbar gelingt. Zur Lösung dieser Aufgabe wird erfindungsgemäß vorgeschlagen, daß ein Gleichspannungsfeld zur Erzielung einer Polarisation der Emulsion angelegt wird und daß das kontinuierliche Gleichspannungsfeld von einem Wechselfeld überlagert wird. Dadurch, daß über die gesamte Behandlungsdauer ein Gleichspannungsfeld vorgegeben wird, wird ein Grundpolarisationszustand erzielt, bei welchem sich die Wassertröpfchen in vorbestimmter Weise ausrichten, im allgemeinen von der Oberflächenspannung jedoch noch zusammengehalten werden. Da zumindest eine der Elektroden als isolierte Elektrode zum Einsatz gelangt, fließt in der Flüsssigkeit kein Strom, und dadurch, daß einem derartigen kontinuierlichen Gleichspannungsfeld ein Wechselfeld überlagert wird, kann die nötige Bewegungsenergie aufgebracht werden, welche zur Vereinigung einer der Phasen durch Überwindung der Oberflächenspannung und schließlich zur Spaltung der Emulsion führt. Die Energie des Wechselfeldes muß hiebei nicht, wie bei den bekannten Verfahren, die Polarisation bzw. Deformation der Teilchen im Takt mit dem Wechselfeld umdrehen, so daß Wirkungsverluste für die Polarisationsänderung vermieden werden. Es können wesentlich wirkenergieärmere Wechselspannungsfelder angelegt werden, so daß die Erwärmung wesentlich geringer bleibt und auch die Durchbruchsspannung nicht ohne weiteres überschritten werden kann. Durch die Überlagerung mit einem Wechselfeld kann innerhalb einer Spaltzelle eine stehende Welle aufgebaut werden, wobei die zusammenbrechenden Emulsionströpfchen an die Knotenstellen der stehenden Welle gedrängt werden, wo die einzelnen Phasen sich sammeln und ihrer Dichte entsprechend ablaufen können. Mit Vorteil wird im Rahmen des erfindungsgemäßen Verfahrens so vorgegangen, daß das Wechselfeld durch Anlegen einer Wechselspannung mit einer Frequenz zwischen 200 Hz und 15 kHz, insbesondere 250 Hz bis 12 kHz, erzeugt wird, wobei bei einer derartigen Frequenz der Wechselspannung durch einfache Variation des Elektrodenabstandes die Ausbildung stehender Wellen und damit eine optimale Phasentrennung erzielt werden kann.

Der geringste Energieverbrauch läßt sich im Rahmen des erfindungsgemäßen Verfahrens dadurch erzielen, daß der Elektrodenabstand und die Wechselfeldfrequenz so aufeinander abgestimmt werden, daß zwischen den Elektroden eine stehende Welle ausgebildet wird, wobei die Vorpolarisation ohne Wirkungsverluste des Wechselfeldes in einfacher Weise dadurch aufrechterhalten werden kann, daß die maximale Feldstärke des Wechselfeldes kleiner gewählt wird als die Feldstärke des Gleichspannungsfeldes.

2

Die Ausbildung stehender Wellen bei Verwendung eines Gleichspannungsfeldes mit überlagertem Wechselfeld läßt sich bei jeweils empirisch ermittelten Plattenabständen ohne weiteres verwirklichen, wobei der Plattenabstand jeweils einem Halbwellenvielfachen der ausgebildeten, mechanischen Schwingung in der Emulsion entsprechen soll. Das überlagerte Wechselfeld wird in einfacher Weise durch Anlegen einer periodischen Wechselspannung erzeugt.

Bei Verwendung von Wechselspannungsfeldern ohne gleichzeitiger Anwendung eines Gleichspannungsfeldes konnte die Ausbildung für die Spaltung von Emulsionen günstiger, stehender Wellen nicht beobachtet werden, und es ist vergleichsweise eine wesentlich höhere Energie erforderlich, um eine koaleszenzbeschleunigende Wirkung feststellen zu können.

Mit dem erfindungsgemäßen Verfahren ist es möglich, bei relativ kurzer Verweilzeit im Spaltapparat auch schwer zu spaltende Emulsionen reproduzierbar in die einzelnen Phasen zu trennen.

Die Erfindung wird nachfolgend an Hand eines Ausführungsbeispieles näher erläutert.

Eine Wasser-in-Öl-Emulsion mit einem Volumsverhältnis von etwa 2:10 und einem Wassergehalt von ca. 22 Gew.-% wurde während 1 min bei Anlegen eines Gleichspannungs- und eines überlagerten Wechselfeldes bei einer Frequenz von 10 kHz bei einem Plattenabstand von 5 mm einer Spaltung unterzogen. An der Austrittsseite konnten als Obergrenze 0,5 Gew.-% Rest Wasser im Öl festgestellt werden, wobei mit einer Durchflußmenge von 12 l Emulsion pro Stunde der Spaltungsreaktor durchströmt wurde.

**Patentansprüche**

1. Verfahren zum Spalten von Emulsionen des Typs Öl-in-Wasser oder Wasser-in-Öl unter Anwendung eines elektrischen Feldes, welches zwischen elektrisch voneinander isolierten Elektroden aufgebaut wird, dadurch gekennzeichnet, daß ein Gleichspannungsfeld zur Erzielung einer Polarisation der Emulsion angelegt wird und daß das kontinuierliche Gleichspannungsfeld von einem Wechselfeld überlagert wird.

2. Verfahren nach Anspruch 1, dadurch gekennzeichnet, daß das Wechselfeld durch Anlegen einer Wechselspannung mit einer Frequenz zwischen 200 Hz und 15 kHz, insbesondere 250 Hz bis 12 kHz, erzeugt wird.

3. Verfahren nach Anspruch 1 oder 2, dadurch gekennzeichnet, daß der Elektrodenabstand und die Wechselfeldfrequenz so aufeinander abgestimmt werden, daß zwischen den Elektroden eine stehende Welle ausgebildet wird.

4. Verfahren nach Anspruch 1, 2 oder 3, dadurch gekennzeichnet, daß die maximale Feldstärke des Wechselfeldes kleiner gewählt wird als die Feldstärke des Gleichspannungsfeldes.

5. Verfahren nach einem der Ansprüche 1 bis 4, dadurch gekennzeichnet, daß das Wechselfeld durch Anlegen einer periodischen Wechselspannung erzeugt wird.